# EUROPÄISCHE PATENTSCHRIFT

(11) **EP 3 345 268 B1**
(45) Veröffentlichungstag und Bekanntmachung des Hinweises auf die Patenterteilung: **09.12.2020**
(21) Anmeldenummer: 16759697.2
(22) Anmeldetag: 17.08.2016
(51) Int. Cl.: H01T 4/16, H01T 15/00, H01T 4/20

(54) **MEHRFACHFUNKENSTRECKENABLEITER**
MULTIPLE SPARK-GAP ARRESTER
LIMITEUR DE SURTENSION À ÉCLATEURS MULTIPLES

(30) Priorität: 31.08.2015 DE 102015114504
(43) Veröffentlichungstag der Anmeldung: 11.07.2018
(73) Patentinhaber: TDK Electronics AG, 81671 München (DE)
(72) Erfinder: BOBERT, Peter, 14612 Falkensee (DE); DORSCH, Eduard, 14624 Dallgow (DE); WERNER, Frank, 13591 Berlin (DE)
(74) Vertreter: Epping - Hermann - Fischer
(86) Internationale Anmeldenummer: PCT/EP2016/069537
(87) Internationale Veröffentlichungsnummer: WO 2017/036803

(56) Entgegenhaltungen:
- DE-A1- 10 230 827
- US-A- 3 848 156
- US-A1- 2012 112 872

## Beschreibung

Die Erfindung betrifft einen Mehrfachfunkenstreckenableiter mit einer Mehrzahl in Reihe geschalteter Funkenstrecken zum Überspannungsschutz.

Funkenstrecken können zur Ableitung von Überspannungsspitzen eingesetzt werden. Eine Funkenstrecke umfasst üblicherweise einen Hohlkörper aus isolierendem Material, der einen Entladungsraum zwischen zwei Elektroden formt. Steigt die Spannung zwischen den beiden Elektroden auf eine Zündspannung an, so werden die Elektroden durch einen Funken kurzgeschlossen. Als Ableiter dienende Funkenstrecken sind Überspannungsschutzeinrichtungen, bei denen nach dem Zünden der Kurzschlussstrom die auftretende Spannungsspitze ableitet.

Allerdings kommen bei Gleichspannung der Funke und der damit einhergehende Stromfluss nicht zum Erlöschen, sobald die Spannung wieder unter die Überspannung fällt. Dies ist erst der Fall, wenn die Spannung unter die Bogenbrennspannung der Funkenstrecke sinkt, die der anliegenden Gleichspannnung entgegenwirkt. Wenn die Spannung unterhalb der Bogenbrennspannung liegt, verlöscht der Lichtbogen selbstständig.

Um die Spannung, bei der der Funken in einer Überspannungsschutzeinrichtung erlöscht, zu erhöhen, können mehrere Funkenstrecken in Reihe geschaltet werden, sodass sich deren Bogenbrennspannungen summieren. Allerdings erhöht sich dadurch auch die Zündspannung, die erforderlich ist, um alle Funkenstrecken zu zünden. Die Zündspannung, bei der die Funkenstrecken einer Reihenschaltung von N Funkstrecken zünden, beträgt ungefähr das N-fache der Zündspannung einer Funkenstrecke multipliziert mit 0,7. Dies bewirkt, dass der Schutzpegel einer solchen Reihenschaltung von Funkenstrecken entsprechend hoch ist. Ziel ist jedoch ein Mehrfachfunkenstreckenableiter mit einer möglichst niedrigen Zündspannung beziehungsweise einem möglichst niedrigen Zündwert, im Idealfall der Zündspannung einer einzigen Funkenstrecke.

Um den Zündwert zu reduzieren, wurde in bisherigen Ansätzen beispielsweise jede Funkenstrecke mit einem Kondensator beschaltet, sodass die ansteigende Impulsspannung dynamisch nach und nach an jeder Strecke anliegt. Ein anderer Ansatz ist eine parallel zur Mehrfachfunkenstrecke angeordnete Hilfszündstrecke, die beispielsweise für jede Funkenstrecke einen Zündübertrager vorsieht. In der DE 102 30 827 A1 wird die Triggerung eines Mehrfachfunkenstreckenableiters mittels einer parallelen Hilfszündstrecke beschrieben.

Die Erfindung stellt einen alternativen Mehrfachfunkenstreckenableiter bereit. Der Mehrfachfunkenstreckenableiter umfasst eine Reihenschaltung einer Mehrzahl von Funkenstrecken zwischen einem ersten Potenzialknoten und einem Bezugspotenzialknoten sowie eine Triggerschaltung mit einem Eingang, der gekoppelt ist mit einem zweiten Potenzialknoten zwischen zwei benachbarten Funkenstrecken, und einem Ausgang, der an zumindest eine der Funkenstrecken zwischen dem zweiten Potenzialknoten und dem Bezugspotenzialknoten gekoppelt ist. Die Triggerschaltung ist ausgebildet, um beim Zünden der Funkenstrecken zwischen dem ersten Potenzialknoten und dem zweiten Potenzialknoten ein Triggersignal für zumindest eine der Funkenstrecken zwischen dem zweiten Potenzialknoten und dem Bezugspotenzialknoten bereitzustellen. Der Mehrfachfunkenstreckenableiter nutzt einen Teil der Funkenstrecken, nämlich die zwischen dem ersten und dem zweiten Potenzialknoten, zur Erzeugung eines Triggersignals, durch das die anderen Funkenstrecken gezündet werden. Das Triggersignal ist vorteilhafterweise ein Spannungsimpuls, der geeignet ist, die Funkenstrecken zwischen dem ersten und zweiten Potenzialknoten über die Reihenschaltung der Varistoren zu zünden.

Vorteilhafterweise umfasst die Triggerschaltung einen Übertrager mit einer Primärseite, die an den Eingang gekoppelt ist, und einer Sekundärseite, die an den Ausgang gekoppelt ist. Der Übertrager dient als Zündimpulsübertrager, der aus einem eingangsseitigen Impuls einen Hochspannungsimpuls generiert. In einem Ausführungsbeispiel weisen Primär- und Sekundärseite jeweils eine Wicklung auf, mittels derer das eingangsseitige Signal induktiv übertragen und verstärkt wird. "Koppeln" umfasst im Zusammenhang dieser Beschreibung sowohl die direkte leitende Verbindung zweier Bauelemente als auch die Verbindung mittels eines oder mehrerer dazwischengeschalteter Bauelemente.

Vorteilhafterweise ist die Primärseite in Reihe zu einem RC-Glied mit parallel geschaltetem Widerstand und Kondensator geschaltet. Parallel zur Reihenschaltung von der Primärseite und dem RC-Glied ist vorteilhafterweise ein Varistor gekoppelt. Ferner ist vorteilhafterweise zwischen dem zweiten Potenzialknoten und Bezugspotenzialknoten ein Spannungsteiler vorgesehen, der den Varistor umfasst, wobei der Spannungsteiler mindestens einen, dem Varistor vorgeschalteten und/oder nachgeschalteten weiteren Varistor umfasst. Durch die Reihenschaltung der Funkenstrecken zwischen dem ersten und dem zweiten Potenzialknoten mit dem RC-Glied und einem Varistor wird beim Auftreten einer Überspannung ein Zündimpuls auf der Primärseite des Übertragers generiert. Dadurch wird auf der Sekundärseite des Übertragers ein Hochspannungsimpuls generiert, der über Kondensatoren, vorteilhafterweise Hochspannungskondensatoren, auf einige Funkenstrecken zwischen dem zweiten Potenzialknoten und dem Bezugspotenzialknoten des Mehrfachfunkenstreckenableiters eingekoppelt wird.

Der Mehrfachfunkenstreckenableiter weist zwischen dem zweiten Potenzialknoten und dem Bezugspotenzialknoten Ableiterabschnitte auf, die jeweils mindestens eine Funkenstrecke aus der Mehrzahl von Funkenstrecken umfassen. Vorteilhafterweise ist die Sekundärseite über die Kondensatoren mit Potenzialknoten zwischen den Ableiterabschnitten verbunden. Der Spannungsdurchbruch des gesamten Mehrfachfunkenstreckenableiters erfolgt, indem die Ableiterabschnitte nacheinander gezündet werden. Das Auskoppeln des Zündimpulses und das Erzeugen eines Hochspannungsimpulses mittels des Übertragers erlaubt ein sicheres Zünden der Ableiterabschnitte. Ferner reduziert das ableiterabschnittsweise Zünden die Anzahl der erforderlichen Kondensatoren. Es sei noch bemerkt, dass die Ableiterabschnitte auch bauartlich, beispielswiese durch Integration der von ihnen umfassten Funkenstrecken, innerhalb des Mehrfachfunkenstreckenableiters erkennbar sein können.

In einer alternativen Ausgestaltung ist die Sekundärseite kapazitiv mit den Ableiterabschnitten gekoppelt. Die Ableiterabschnitte weisen einen Körper aus isolierendem Material auf und die kapazitive Kopplung erfolgt über einen, den Körper zumindest teilweise umlaufenden Leiter. Der Leiter kann als isolierter Draht ausgebildet sein. Alternativ kann der Leiter rohrförmig ausgebildet sein und zwischen dem Leiter und dem Ableiterabschnitt ist eine isolierende Folie vorgesehen.

Die kapazitive Kopplung kann ableiterabschnittsweise erfolgen. Vorteilhafterweise ist ein RC-Glied mit parallel geschaltetem Widerstand und Kondensator zwischen einem der Potenzialknoten, der zwischen zwei benachbarten Ableiterabschnitten ist, und dem Bezugspotenzialknoten gekoppelt. Der Kondensator erlaubt auch, schwer zündbare Ableiter sicher in die Bogenbrennspannung zu treiben und die Zündwilligkeit der Anordnung zu erhöhen. Vorteilhafterweise ist zwischen dem zweiten Potenzialknoten und den Ableiterabschnitten eine Funkenstrecke vorgesehen und ein RC-Glied ist zwischen dem Potenzialknoten, der zwischen den Ableiterabschnitten und der Funkenstrecke ist, und dem Bezugsknoten gekoppelt, um die Zündung des dem zweiten Potenzialknoten nächsten Funkenstreckenabschnitt zu erleichtern.

Weitere Ausgestaltungen ergeben sich aus den abhängigen Ansprüchen.

Nachfolgend wird die Erfindung anhand von Ausführungsbeispielen mit Bezugnahme auf die Zeichnungen erläutert, wobei die Figuren gleicher oder gleich wirkender Bestandteile jeweils mit den gleichen Bezugszeichen gekennzeichnet sind.
- Figur 1: zeigt eine Schaltungsanordnung eines ersten Ausführungsbeispiels eines Mehrfachfunkenstreckenableiters.
- Figur 2: zeigt eine Schaltungsanordnung eines zweiten Ausführungsbeispiels eines Mehrfachfunkenstreckenableiters.

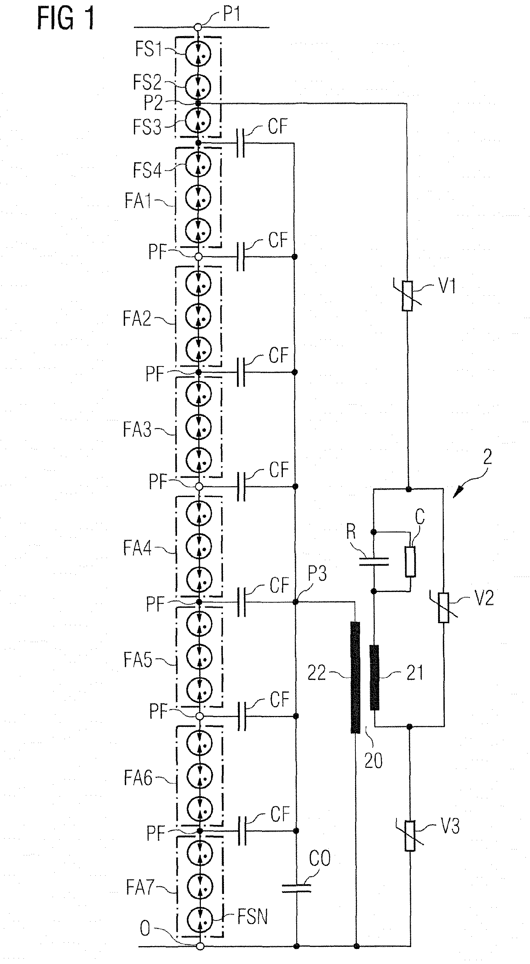

Das erste Ausführungsbeispiel eines Mehrfachfunkenstreckenableiters in Figur 1 umfasst eine Mehrzahl von N Funkenstrecken FS1-FSN, die in Reihe geschaltet sind. Über einen ersten Potenzialknoten P1 und einen Bezugspotenzialknoten 0 kann eine Gleichspannung an die Reihenschaltung der Funkenstrecken FS1-FSN angelegt werden. In diesem Ausführungsbeispiel sind exemplarisch 24 Funkenstrecken FS1-FSN dargestellt. Ausführungsbeispiele können mehr oder weniger Funkenstrecken aufweisen.

Ferner ist eine Triggerschaltung 2 vorgesehen mit einem ersten, zweiten und dritten Varistor V1, V2, V3 in Reihe, einem RC-Glied, mit einem parallel geschalteten Widerstand R und einem Kondensator C, sowie einem Übertrager 20 mit einer Primär- und einer Sekundärseite 21, 22. Der Eingang der Triggerschaltung 2 ist ein zweiter Potenzialknoten P2 zwischen zwei benachbarten Funkenstrecken FS2, FS3. In diesem Ausführungsbeispiel erfolgt der eingangsseitige Abgriff der Triggerschaltung 2 zwischen der zweiten und dritten Funkstrecke FS2, FS3. Zwischen dem zweiten Potenzialknoten P2 und dem Bezugspotenzialknoten 0 ist die Reihenschaltung der Varistoren V1, V2, V3 gekoppelt. Parallel zum zweiten Varistor V2 ist eine Reihenschaltung des RC-Gliedes und der Primärseite 21 des Übertragers 20 gekoppelt.

Ausgang der Triggerschaltung 2 ist ein dritter Potenzialknoten P3; zwischen diesem und dem Bezugspotenzialknoten 0 ist die Sekundärseite 22 gekoppelt. Der dritte Potenzialknoten P3 ist über einen Kondensator CO an den Bezugspotenzialknoten 0 gekoppelt. Der dritte Potenzialknoten P3 ist ferner über Kondensatoren CF an Potenzialknoten PF zwischen Funkenstrecken FS4-FN gekoppelt, die ihrerseits zwischen dem zweiten Potenzialknoten P2 und den Bezugspotenzialknoten 0 in Reihe gekoppelt sind. In diesem Ausführungsbeispiel sind zwischen den Potenzialknoten PF jeweils drei Funkenstrecken vorgesehen, die einen der Ableiterabschnitte FA1-FA7 formen. In anderen Ausführungsbeispielen können mehr oder weniger Funkenstrecken in einem Ableiterabschnitt vorgesehen sein. Es können zwischen dem zweiten Potenzialknoten P2 und dem Bezugspotenzialknoten 0 Ableiterabschnitte mit unterschiedlicher Anzahl von Funkenstrecken vorgesehen sein. Auch Ausführungsbeispiele mit einzelnen Funkenstrecken zwischen zwei Potenzialknoten PF sind möglich.

Bei der beschriebenen Schaltungsanordnung dienen die erste und zweite Funkenstrecke FS1, FS2, die zwischen dem ersten und dem zweiten Potenzialknoten P1, P2 sind, zur Erzeugung eines Triggerimpulses mittels der Triggerschaltung 2 für die weiteren Funkenstrecken FS3-FSN. Die weiteren Funkenstrecken FS3-FSN formen einen Ableiterschutzpfad, dessen Funkenstrecken FS3-FSN durch einen Triggerimpuls gezündet werden.

Bei Überschreiten einer vorgegebenen Spannung zwischen dem ersten Potenzialknoten P1 und dem Bezugspotenzialknoten 0 zünden zunächst die erste und zweite Funkenstrecke FS1, FS2 zwischen dem ersten und dem zweiten Potenzialknoten P1, P2. Die Spannung, bei der die Zündung erfolgt, ist geringer als die einer Reihenschaltung von N Funkenstrecken, da die Spannung durch die Funkenstrecken FS1, FS2 zwischen dem ersten und dem zweiten Potenzialknoten P1, P2 und den Varistorklemmspannungen der Varistoren V1, V2, V3 bestimmt wird. Die Summe der Varistorklemmspannungen ist geringer als die Summe der Bogenbrennspannungen der Funkenstrecken FS3-FSN, zu denen sie parallel geschaltet sind. Dadurch erlaubt das Vorsehen der in Reihe geschalteten Varistoren V1, V2, V3 die Zündspannung des Mehrfachfunkenstreckenableiters zu reduzieren und durch die Wahl der Varistorklemmspannungen sowie der Anzahl der Funkenstrecken zwischen dem ersten und dem zweiten Potenzialknoten P1, P2 auch den Wert der Zündspannung einzustellen. In diesem Ausführungsbeispiel sind exemplarisch zwei Funkenstrecken zwischen dem ersten und dem zweiten Potenzialknoten P1, P2.

Mit Zünden der Funkenstrecken FS1, FS2 zwischen dem ersten und dem zweiten Potenzialknoten P1, P2 fließt ein Strom sowohl über diese Funkenstrecken FS1, FS2 als auch über die Varistoren V1, V2, V3. Während des Stromflusses wirken die Varistoren V1, V2, V3 bis zum Zünden der Ableiterstrecken als Spannungsbegrenzer. Zum Schutz der Primärseite 21 des Übertragers 20 begrenzt der Varistor V2 die dort auftretende Spannung. Ferner bewirkt das RC-Glied einen Impuls an der Primärseite 21 des Übertragers 20. Dadurch wird auf der Sekundärseite 22 des Übertragers 20 ein Hochspannungsimpuls erzeugt, der zur Triggerung der weiteren Funkenstrecken FS3-FSN dient. Der Kondensator C0 dient zur Zwischenspeicherung des Hochspannungsimpulses.

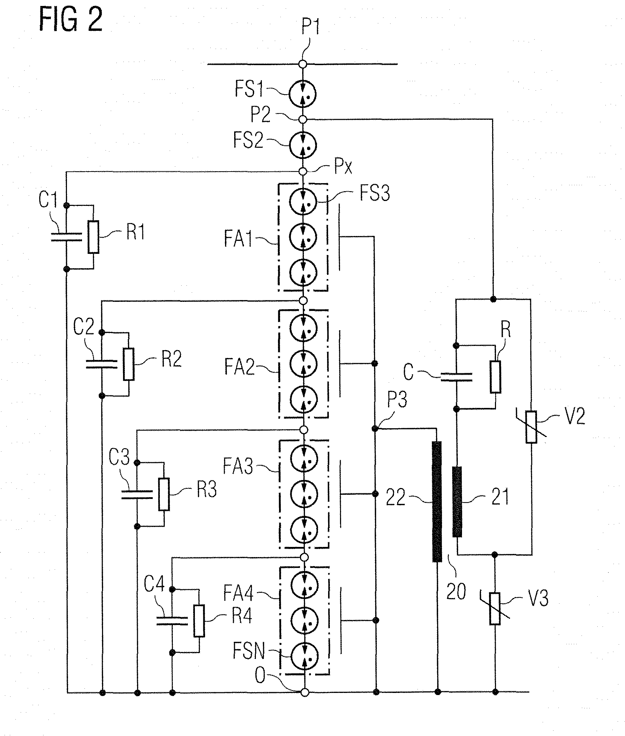

Der Hochspannungsimpuls wird über die dem dritten Potenzialknoten P3 nachgeschalteten Kondensatoren CF, die vorzugsweise als Hochspannungskonsensatoren ausgebildet sind, an die Knoten PF zwischen den Ableiterabschnitten FA1-FA7 angelegt. Die Impulshöhe bestimmt, wie viele Funkenstrecken in einem der Ableiterabschnitte FA1-FA7 zusammengefasst und durch den anliegenden Impuls gezündet werden können. In diesem Ausführungsbeispiel erlaubt die Impulshöhe drei Funkenstrecken zusammenzufassen. Der Durchbruch des gesamten Mehrfachfunkenstreckenableiters erfolgt nahezu gleichzeitig, allerdings in Abhängigkeit des jeweiligen Spannungsabfalls an den Ableiterabschnitten. So zündet der dem Bezugspotenzial 0 am nächsten liegende Ableiterabschnitt FA7 als erster, gefolgt von dem benachbarten Ableiterabschnitt FA6, bis schrittweise alle Ableiterabschnitte FA5-FA1 bis zum zweiten Potenzialknoten P2 gezündet worden sind, sodass alle Funkenstrecken FS1-FSN des Mehrfachfunkenstreckenableiters leitend sind und die Überspannung zwischen dem ersten Potenzialknoten P1 und dem Bezugsknoten 0 kurzschließen. Sobald die Spannung unter die Summe der Bogenbrennspannung fällt, verlöscht der Funke und der Mehrfachfunkenstreckenableiter kehrt wieder in seinen Ausgangszustand zurück. Figur 2 zeigt eine Schaltungsanordnung eines zweiten Ausführungsbeispiels eines Mehrfachfunkenstreckenableiters. Im Folgenden wird lediglich auf die Unterschiede zum vorangegangenen Ausführungsbeispiel eingegangen. Der Mehrfachfunkenstreckenableiter umfasst in diesem Ausführungsbeispiel 14 Funkenstrecken FS1-FSN, wobei die Anzahl lediglich exemplarisch gewählt ist. In diesem Ausführungsbeispiel erfolgt der eingangsseitige Abgriff der Triggerschaltung 20 zwischen der ersten und zweiten Funkenstrecke FS1, FS2. Der Spannungsteiler umfasst lediglich zwei Varistoren V2 und V3.
Der Ableiterschutzpfad zwischen der zweiten Funkenstrecke FS2 und dem Bezugspotenzialknoten 0 umfasst vier Ableiterabschnitte FA1-FA4 mit je drei Funkenstrecken. Von den Potenzialknoten PF zwischen den Ableiterabschnitten FA1-FA4 ist jeweils ein RC-Glied mit parallel geschaltetem Widerstand R2, R3, R4 und Kondensator C2, C3, C4 zum Bezugspotenzialknoten 0 gekoppelt. Auch zwischen dem Potenzialknoten Px zwischen der zweiten Funkenstrecke FS2 und dem ersten Ableiterabschnitt FA1 ist ein RC-Glied mit parallel geschaltetem Widerstand R1 und Kondensator C1 zum Bezugspotenzialknoten 0 gekoppelt.

Die Zündung dieses Mehrfachfunkenstreckenableiters erfolgt kapazitiv über eine äußere nicht elektrisch mit den Funkenstrecken verbundene Ankopplung des Hochspannungsimpulses der Sekundärseite 22 des Übertragers 20. Die Ankopplung kann, wie in Figur 2 dargestellt, ableiterabschnittsweise erfolgen. Die Ankopplung kann, wie beispielsweise von Blitzröhren bekannt, durch je einen isolierenden Draht pro Ableiterabschnitt erfolgen. Dabei liegt jeder isolierte Draht in einer engen Schlaufe um die Ableiterkeramik. Zur Vereinfachung kann diese Ankopplung aber auch wie folgt ausgeführt werden: Der Mehrfachfunkenstreckenableiter wird radial mit einer isolierenden Folie versehen und in einem vorzugsweise rohrförmigen Metallkörper angeordnet. Die Länge des rohrförmigen Körpers entspricht der Höhe des Mehrfachfunkenstreckenableiters. Um einen Außenüberschlag an den Stirnseiten zu verhindern, muss die Folie an beiden Enden überstehen oder alternative Mittel vorgesehen sein, die Überschlag verhindern. Der Metallkörper wird elektrisch leitend mit der Sekundärseite 22 des Übertragers 20 verbunden. Um auch schwer zündbare Mehrfachfunkenstreckenableiter sicher in die Bogenbrennspannung zu treiben und die Zündwilligkeit der gesamten Ableiterstrecke zu erhöhen, sind die vier Ableiterabschnitt FA1-FA4 jeweils mit dem Kondensator C1, C2, C3, C4 innerhalb der RC-Glieder beschaltet. Damit eine Kontaktierung der unter dem Metallkörper befindlichen Elektroden der Funkenstrecken erfolgen kann, weist der Metallkörper Aussparungen auf. In einem Ausführungsbeispiel ist der Metallkörper ein Rohr mit einem breiten Schlitz, das den Zugriff auf die Elektroden ermöglicht. Aussparungen in der Folie sind zur Kontaktierung auch vorzusehen. Für eine sichere Funktion der Schaltung ist es ausreichend, dass das Metallrohr den Umfang des Mehrfachfunkenstreckenableiters nur auf zirka 330 Grad umschließt. Wird das Metallrohr aus federndem Material hergestellt, lässt es sich leicht auf den Mehrfachfunkenstreckenableiter aufschnappen und dabei die isolierende Folie festklemmen.

Bei dem Ausführungsbeispiel in Figur 2 führt das Zünden der ersten Funkenstrecke FS1 zur Generierung eines Hochspannungsimpulses an der Sekundärseite 22. Dieser Vorgang ist bereits im Zusammenhang mit Figur 1 beschrieben worden. Der Stromfluss durch die erste und zweite Funkenstrecke FS1, FS2 lädt zudem den Kondensator C1 im ersten RC-Glied auf. Bei kapazitivem Zünden des dem zweiten Potenzialknoten P1 nächstliegenden Ableiterabschnitts erfolgt ein Ladungsfluss vom Kondensator C1 des ersten RC-Gliedes über die nunmehr gezündeten Funkenstrecken des ersten Ableiterabschnitts FA1 zum Kondensator C2 des zweiten RC-Glieds. Dieser Ladungsfluss über die Kondensatoren C2, C3, C4 setzt sich schrittweise mit dem Zünden des zweiten Ableiterabschnitts FA2, dann des dritten Ableiterabschnitts FA3 und schließlich des vierten Ableiterabschnitts FA4 fort.

Die Ausführungsbeispiele haben gemeinsam, dass der Zündimpuls nach Zünden weniger Funkenstrecken ausgekoppelt und mit Hilfe eines Hochspannungsübertragers zur Erzeugung eines Hochspannungsimpulses genutzt wird. Die erzeugte Hochspannung bewirkt ein sicheres Zünden der Ableiterabschnitte des Mehrfachfunkenstreckenableiters.

## Patentansprüche

1. Mehrfachfunkenstreckenableiter mit
- einer Reihenschaltung einer Mehrzahl von Funkenstrecken (FS1-FSN) zwischen einem ersten Potenzialknoten (P1) und einem Bezugspotenzialknoten (0),
- einer Triggerschaltung (2) mit einem Eingang, der gekoppelt ist mit einem zweiten Potenzialknoten (P2) zwischen zwei benachbarten Funkenstrecken (FS2, FS3; FS1, FS2) der Mehrzahl von Funkenstrecken (FS1-FSN), und einem Ausgang (P3), der an zumindest eine der Funkenstrecken (FS3-FSN) zwischen dem zweiten Potenzialknoten (P2) und dem Bezugspotenzialknoten (0) gekoppelt ist,
wobei die Triggerschaltung (2) ausgebildet ist, bei Zünden der Funkenstrecke (FS1) oder der Funkenstrecken (FS1, FS2) zwischen dem ersten Potenzialknoten (P1) und dem zweiten Potenzialknoten (P2) ein Triggersignal für die zumindest eine der Funkenstrecken (FS3-FSN) zwischen dem zweiten Potenzialknoten (P2) und dem Bezugspotenzialknoten (0) bereitzustellen.

2. Mehrfachfunkenstreckenableiter nach Anspruch 1,
wobei die Triggerschaltung (2) einen Übertrager (20) mit einer Primärseite (21), die an den Eingang (P2) gekoppelt ist, und einer Sekundärseite (22), die an den Ausgang (P3) gekoppelt ist, umfasst.

3. Mehrfachfunkenstreckenableiter nach Anspruch 1 oder 2,
wobei die Primärseite (21) in Reihe zu einem RC-Glied mit parallel geschaltetem Widerstand (R) und Kondensator (C) gekoppelt ist.

4. Mehrfachfunkenstreckenableiter nach Anspruch 3,
wobei parallel zur Reihenschaltung von der Primärseite (21) und dem RC-Glied ein Varistor (V2) gekoppelt ist.

5. Mehrfachfunkenstreckenableiter nach Anspruch 4,
wobei zwischen dem zweiten Potenzialknoten (P2) und dem Bezugspotenzialknoten (0) ein Spannungsteiler (V1, V2, V3) gekoppelt ist, der den Varistor (V2) umfasst.

6. Mehrfachfunkenstreckenableiter nach Anspruch 5,
wobei der Spannungsteiler (V1, V2, V3) mindestens einen, dem Varistor (V2) vorgeschalteten und/oder nachgeschalteten weiteren Varistor (V1, V3) umfasst.

7. Mehrfachfunkenstreckenableiter nach einem der Ansprüche 1 bis 6 mit Ableiterabschnitten (FA1-FA7) zwischen dem zweiten Potenzialknoten (P2) und dem Bezugspotenzialknoten (0), die jeweils mindestens eine Funkenstrecke aus der Mehrzahl von Funkenstrecken (FS3-FSN) aufweisen.

8. Mehrfachfunkenstreckenableiter nach Anspruch 7, wobei der Ausgang (P3) über einen Kondensator (CF) mit einem Potenzialknoten (PF) zwischen zwei benachbarten Ableiterabschnitten (FA1-FA7) gekoppelt ist.

9. Mehrfachfunkenstreckenableiter nach Anspruch 7,
wobei der Ausgang (P3) kapazitiv mit den Ableiterabschnitten (FA1-FA4) gekoppelt ist.

10. Mehrfachfunkenstreckenableiter nach Anspruch 9,
wobei ein RC-Glied mit parallel geschaltetem Widerstand (R2, R3, R4) und Kondensator (C2, C3, C4) zwischen einem der Potenzialknoten (PF), die zwischen zwei Ableiterabschnitten (FA1-FA4) sind, und dem Bezugspotenzialknoten (0) gekoppelt ist.

11. Mehrfachfunkenstreckenableiter nach Anspruch 10,
wobei zwischen dem zweiten Potenzialknoten (P2) und den Ableiterabschnitten (FA1-FA4) eine Funkenstrecke (FS2) aus der Mehrzahl von Funkenstrecken (FS1-FSN) gekoppelt ist und ein RC-Glied mit parallel geschaltetem Widerstand (R1) und Kondensator (C1) zwischen dem Potenzialknoten (Px), der zwischen den Ableiterabschnitten (FA1) und der Funkenstrecke (FS2) ist, und dem Bezugsknoten (0) gekoppelt ist.

12. Mehrfachfunkenstreckenableiter nach einem der Ansprüche 9 bis 11,
wobei die Ableiterabschnitte (FA1-FA4) einen Körper aus isolierendem Material aufweisen und die kapazitive Kopplung über einen den Körper zumindest teilweise umlaufenden Leiter erfolgt.

13. Mehrfachfunkenstreckenableiter nach Anspruch 12,
wobei der Leiter als isolierter Draht ausgebildet ist.

14. Mehrfachfunkenstreckenableiter nach Anspruch 12,
wobei der Leiter rohrförmig ausgebildet ist und zwischen dem Leiter und dem Ableiterabschnitt eine isolierende Folie vorgesehen ist.

15. Mehrfachfunkenstreckenableiter nach Anspruch 14,
wobei der rohrförmige Leiter sich zumindest entlang aller Ableiterabschnitte erstreckt.

## Claims

1. Multiple spark-gap arrester having
- a series circuit comprising a plurality of spark gaps (FS1-FSN) between a first potential node (P1) and a reference-ground potential node (0),
- a trigger circuit (2) having an input, which is coupled to a second potential node (P2) between two adjacent spark gaps (FS2, FS3; FS1, FS2) of the plurality of spark gaps (FS1-FSN), and an output (P3), which is coupled to at least one of the spark gaps (FS3-FSN) between the second potential node (P2) and the reference-ground potential node (0),
wherein the trigger circuit (2) is configured, when the spark gap (FS1) or the spark gaps (FS1, FS2) between the first potential node (P1) and the second potential node (P2) are ignited, to supply a trigger signal for the at least one of the spark gaps (FS3-FSN) between the second potential node (P2) and the reference-ground potential node (0).

2. Multiple spark-gap arrester according to Claim 1, wherein the trigger circuit (2) comprises a transformer (20) having a primary side (21), which is coupled to the input (P2), and a secondary side (22), which is coupled to the output (P3).

3. Multiple spark-gap arrester according to Claim 1 or 2, wherein the primary side (21) is coupled in series with an RC element having a resistor (R) connected in parallel and a capacitor (C).

4. Multiple spark-gap arrester according to Claim 3, wherein a varistor (V2) is coupled in parallel with the series circuit by the primary side (21) and the RC element.

5. Multiple spark-gap arrester according to Claim 4, wherein a voltage divider (V1, V2, V3) comprising the varistor (V2) is coupled between the second potential node (P2) and the reference-ground potential node (0).

6. Multiple spark-gap arrester according to Claim 5, wherein the voltage divider (V1, V2, V3) comprises at least one further varistor (V1, V3) connected upstream and/or connected downstream of the varistor (V2).

7. Multiple spark-gap arrester according to one of Claims 1 to 6 having arrester sections (FA1-FA7) between the second potential node (P2) and the reference-ground potential node (0), each arrester section having at least one spark gap from the plurality of spark gaps (FS3-FSN).

8. Multiple spark-gap arrester according to Claim 7, wherein the output (P3) is coupled to a potential node (PF) between two adjacent arrester sections (FA1-FA7) by means of a capacitor (CF).

9. Multiple spark-gap arrester according to Claim 7, wherein the output (P3) is capacitively coupled to the arrester sections (FA1-FA4).

10. Multiple spark-gap arrester according to Claim 9, wherein an RC element having a resistor (R2, R3, R4) connected in parallel and a capacitor (C2, C3, C4) is coupled between one of the potential nodes (PF), which are between two arrester sections (FA1-FA4), and the reference-ground potential node (0).

11. Multiple spark-gap arrester according to Claim 10, wherein a spark gap (FS2) from the plurality of spark gaps (FS1-FSN) is coupled between the second potential node (P2) and the arrester sections (FA1-FA4) and an RC element having a resistor (R1) connected in parallel and a capacitor (C1) is coupled between the potential node (Px), which is between the arrester sections (FA1) and the spark gap (FS2), and the reference-ground node (0).

12. Multiple spark-gap arrester according to one of Claims 9 to 11, wherein the arrester sections (FA1-FA4) have a body made of insulating material and the capacitive coupling is effected by means of a conductor that at least partially surrounds the body.

13. Multiple spark-gap arrester according to Claim 12, wherein the conductor is configured as an insulated wire.

14. Multiple spark-gap arrester according to Claim 12, wherein the conductor is of tubular design and an insulating film is provided between the conductor and the arrester section.

15. Multiple spark-gap arrester according to Claim 14, wherein the tubular conductor extends at least along all the arrester sections.

## Revendications

1. Parafoudre à éclateurs multiples comprenant
- un montage en série d'une pluralité d'éclateurs (FS1-FSN) entre un premier nœud de potentiel (P1) et un nœud de potentiel de référence (0),
- un circuit de déclenchement (2) pourvu d'une entrée, qui est couplée à un deuxième nœud de potentiel (P2) situé entre deux éclateurs adjacents (FS2, FS3 ; FS1, FS2) de la pluralité d'éclateurs (FS1-FSN), et d'une sortie (P3) qui est couplée à l'un au moins des éclateurs (FS3-FSN) situés entre le deuxième nœud de potentiel (P2) et le nœud de potentiel de référence (0),
le circuit de déclenchement (2) étant conçu pour produire un signal de déclenchement destiné à l'un au moins des éclateurs (FS3-FSN) entre le deuxième nœud de potentiel (P2) et le nœud de potentiel de référence (0) lors de l'amorçage de l'éclateur (FS1) ou des éclateurs (FS1, FS2) situés entre le premier nœud de potentiel (P1) et le deuxième nœud de potentiel (P2).

2. Parafoudre à éclateurs multiples selon la revendication 1, le circuit de déclenchement (2) comprenant un transformateur (20) pourvu d'un côté primaire (21), qui est couplé à l'entrée (P2), et d'un côté secondaire (22) qui est couplé à la sortie (P3).

3. Parafoudre à éclateurs multiples selon la revendication 1 ou 2, le côté primaire (21) étant couplé en série à un circuit RC pourvu d'une résistance (R) et d'un condensateur (C) montés en parallèle.

4. Parafoudre à éclateurs multiples selon la revendication 3, une varistance (V2) étant couplée parallèlement au circuit série formé par le côté primaire (21) et le circuit RC.

5. Parafoudre à éclateurs multiples selon la revendication 4, un diviseur de tension (V1, V2, V3), qui comprend la varistance (V2), étant couplé entre le deuxième nœud de potentiel (P2) et le nœud de potentiel de référence (0).

6. Parafoudre à éclateurs multiples selon la revendication 5, le diviseur de tension (V1, V2, V3) comprenant au moins une autre varistance (V1, V3) montée en amont et/ou en aval de la varistance (V2).

7. Parafoudre à éclateurs multiples selon l'une des revendications 1 à 6 comprenant des portions de parafoudre (FA1-FA7) qui sont situées entre le deuxième nœud de potentiel (P2) et le nœud de potentiel de référence (0) et qui comportent chacune au moins un éclateur de la pluralité d'éclateurs (FS3-FSN).

8. Parafoudre à éclateurs multiples selon la revendication 7, la sortie (P3) étant couplée par le biais d'un condensateur (CF) à un nœud de potentiel (PF) situé entre deux portions de parafoudre adjacentes (FA1-FA7).

9. Parafoudre à éclateurs multiples selon la revendication 7, la sortie (P3) étant couplée de manière capacitive aux portions de parafoudre (FA1-FA4).

10. Parafoudre à éclateurs multiples selon la revendication 9, un circuit RC, pourvu d'une résistance (R2, R3, R4) et d'un condensateur (C2, C3, C4) montés en parallèle, étant couplé entre l'un des nœuds de potentiel (PF), qui sont situés entre deux portions de parafoudre (FA1-FA4), et le nœud de potentiel de référence (0).

11. Parafoudre à éclateurs multiples selon la revendication 10, un éclateur (FS2) de la pluralité d'éclateurs (FS1-FSN) étant couplé entre le deuxième nœud de potentiel (P2) et les portions de parafoudre (FA1-FA4) et un circuit RC, pourvu d'une résistance (R1) et d'un condensateur (C1) montés en parallèle, étant couplé entre le nœud de potentiel (Px), qui est situé entre les portions de parafoudre (FA1) et l'éclateur (FS2), et le nœud de référence (0).

12. Parafoudre à éclateurs multiples selon l'une des revendications 9 à 11, les portions de parafoudre (FA1-FA4) comportant un corps en matériau isolant et le couplage capacitif étant effectué par le biais d'un conducteur entourant au moins partiellement le corps.

13. Parafoudre à éclateurs multiples selon la revendication 12, le conducteur étant conçu sous la forme d'un fil isolé.

14. Parafoudre à éclateurs multiples selon la revendication 12, le conducteur étant conçu sous forme tubulaire et un film isolant étant prévu entre le conducteur et la portion de parafoudre.

15. Parafoudre à éclateurs multiples selon la revendication 14, le conducteur tubulaire s'étendant au moins le long de toutes les portions de parafoudre.
